(19) Europäisches Patentamt / European Patent Office / Office européen des brevets

(11) **EP 2 901 411 B1**

(12) **FASCICULE DE BREVET EUROPEEN**

(45) Date de publication et mention de la délivrance du brevet:
**01.01.2020 Bulletin 2020/01**

(21) Numéro de dépôt: **13766084.1**

(22) Date de dépôt: **24.09.2013**

(51) Int Cl.:
**G06T 1/20** *(2006.01)*    **G06F 17/14** *(2006.01)*
**G06T 3/00** *(2006.01)*

(86) Numéro de dépôt international:
**PCT/EP2013/069761**

(87) Numéro de publication internationale:
**WO 2014/048886 (03.04.2014 Gazette 2014/14)**

(54) **DISPOSITIF DE DECOMPOSITION D'IMAGES PAR TRANSFORMEE EN ONDELETTES**

BILDZERLEGUNG MITTELS WAVELET-TRANSFORMATION

IMAGE DECOMPOSITION USING WAVELET TRANSFORM

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **26.09.2012 FR 1259051**

(43) Date de publication de la demande:
**05.08.2015 Bulletin 2015/32**

(73) Titulaire: **Commissariat à l'Énergie Atomique et aux Énergies Alternatives
75015 Paris (FR)**

(72) Inventeurs:
- **COURROUX, Sébastien**
  **F-91140 Villebon-sur-yvette (FR)**
- **CHEVOBBE, Stéphane**
  **F-92340 Bourg-la-reine (FR)**
- **DAROUICH, Mehdi**
  **F-92170 Vanves (FR)**
- **PAINDAVOINE, Michel**
  **F-21370 Plombieres Les Dijon (FR)**

(74) Mandataire: **Lucas, Laurent Jacques et al
Marks & Clerk France
Conseils en Propriété Industrielle
Immeuble Visium
22, Avenue Aristide Briand
94117 Arcueil Cedex (FR)**

(56) Documents cités:
**WO-A1-02/097718    US-B1- 6 587 589**

- **FEIL M ET AL: "Wavelet Packet Image Decomposition on MIMD Architectures", REAL-TIME IMAGING, ACADEMIC PRESS LIMITED, GB, vol. 8, no. 5, octobre 2002 (2002-10), pages 399-412, XP004419746, ISSN: 1077-2014, DOI: 10.1006/RTIM.2002.0296**
- **PENG CAO ET AL: "Area-efficient line-based twodimensional discrete wavelet transform architecture without data buffer", MULTIMEDIA AND EXPO, 2009. ICME 2009. IEEE INTERNATIONAL CONFERENCE ON, IEEE, PISCATAWAY, NJ, USA, 28 juin 2009 (2009-06-28), pages 1094-1097, XP031510945, DOI: 10.1109/ICME.2009.5202689 ISBN: 978-1-4244-4290-4 cité dans la demande**
- **COCKBURN B F ET AL: "Efficient Architectures for 1-D and 2-D Lifting-Based Wavelet Transforms", IEEE TRANSACTIONS ON SIGNAL PROCESSING, IEEE SERVICE CENTER, NEW YORK, NY, US, vol. 52, no. 5, mai 2004 (2004-05), pages 1315-1326, XP011110708, ISSN: 1053-587X, DOI: 10.1109/TSP.2004.826175 cité dans la demande**

EP 2 901 411 B1

**Description**

L'invention concerne un dispositif de décomposition d'images en au moins trois niveaux par transformée en ondelettes et s'applique notamment au domaine du traitement d'images.

L'utilisation de la représentation en ondelettes d'un signal permet non seulement de le décomposer en différentes bandes de fréquences comme le fait l'analyse de Fourier, mais permet aussi d'en obtenir différentes représentations à différentes échelles. L'extension de cette décomposition aux signaux bidimensionnels (2D) donne aussi un renseignement sur l'orientation des irrégularités présentes dans l'image.

Le document US6587589 décrit une architecture pour effectuer une transformée en ondelettes discrète à deux dimensions. Cette architecture comprend un module de transformation comprenant un premier étage et un second étage de décomposition d'une image d'entrée en quatre bandes; parmi les quatre bandes, la bande ayant la fréquence basse dans les deux sens horizontal et vertical sert d'image d'entrée pour l'opération de décomposition de niveau suivant; un multiplexeur pour sélectionner la bande ayant la fréquence basse dans les deux directions horizontale et verticale comme image d'entrée pour alimenter dans le module de transformation; et un module de mémoire optionnel pour stocker la bande ayant la fréquence la plus basse à la fois en direction horizontale et verticale.

Le document WO02/097718 décrit une structure de microprocesseur pour effectuer une transformée en ondelettes discrète, ladite transformée en ondelettes discrète opération comprenant la décomposition d'un signal d'entrée comprenant un vecteur d'échantillons km d'entrée rx, r, k et m sur un nombre spécifié de niveaux de décomposition j, où j est un nombre entier dans la gamme de 1 à J, en partant d'un premier niveau de décomposition et en passant à un niveau de décomposition finale, la structure de microprocesseur comportant un nombre de niveaux de traitement, chacun des niveaux de traitement correspondant à un niveau de décomposition j de la transformée en ondelettes discrète et étant mis en œuvre par un certain nombre d'éléments de traitement de base, le nombre d'éléments de traitement de base mis en œuvre dans chacun des niveaux de traitement diminuant d'un facteur k depuis un niveau de décomposition j à un niveau de décomposition j + 1.

L'article de Feil et al. intitulé « Wavelet Packet Image Décomposition on MIMD Architectures" publié dans Real-Time Imaging, Academic Press Ltd, GB vol. 8, no 5, octobre 2002, pages 399-412, XP004419746 décrit des algorithmes pour paquets d'ondelettes 2D (WP) et en particulier décrit la généralisation des algorithmes WP parallèles qui sont contraints à un certain nombre d'éléments de processeur égal à une puissance de 4. Des optimisations d'algorithmes à mémoire partagée sont décrites. Les résultats obtenus selon le passage de messages (MPI) et selon la programmation de mémoire partagée (OpenMP) sont comparées.

La transformée en ondelettes présente des qualités utiles au traitement du signal et d'images puisqu'elle permet d'obtenir une représentation temporelle, fréquentielle et multi-échelle d'un signal. Cette méthode d'analyse est une évolution logique de l'analyse par transformée de Fourier, l'analyse dimensionnelle associée à cette transformée en ondelettes permettant d'étudier le signal à différentes échelles.

Contrairement à l'analyse d'un signal continu, les paramètres de translation et de dilatation de l'ondelette mère varient de manière discrète pour l'analyse d'un signal discret. L'augmentation progressive du facteur de dilatation est obtenue en appliquant récursivement l'opération de filtrage ondelette sur un même signal discret.

A titre d'illustration, un signal monodimensionnel (1D) est décomposé selon la procédure suivante : le signal d'origine est décomposé en un signal de détail Wd1 amplifiant les composantes hautes fréquences du signal et en un signal d'approximation Wa1 qui propose une vision lissée du signal d'origine. Ce dernier est à son tour décomposé en un signal de détail Wd2 et un signal d'approximation Wa2. Cette procédure est alors répétée jusqu'à obtenir le nombre de niveaux de décomposition souhaité. On obtient une série de signaux détails Wd1, ..., Wdn et un signal Wan qui permettent d'analyser le signal d'entrée à différentes échelles.

L'utilisation de filtres orthogonaux de décomposition permet d'assurer la reconstruction de l'information et permet de supprimer la redondance présente dans les bandes d'approximation et de détail. Il est donc possible d'appliquer une opération de sous-échantillonnage d'un facteur deux à la sortie de chaque filtre, ce qui permet d'assurer une représentation concise de l'information, le nombre d'échantillons entre l'entrée de la transformée et sa sortie étant conservé.

La décomposition 2D d'un signal s'obtient par décomposition successive selon l'axe horizontal puis selon l'axe vertical. Trois imagettes détail LH, HL et HH ainsi qu'une imagette approximation sont obtenues. Le signal HH qui correspond au résultat de deux filtres passe haut successifs est souvent appelé signal diagonal. De la même façon, on peut apparenter les signaux LH et HL à des signaux verticaux et horizontaux respectivement. Le signal d'approximation est de nouveau décomposé afin d'obtenir une décomposition multi-échelle. Les coefficients produits sont entrelacés tant en termes d'orientation que d'échelle.

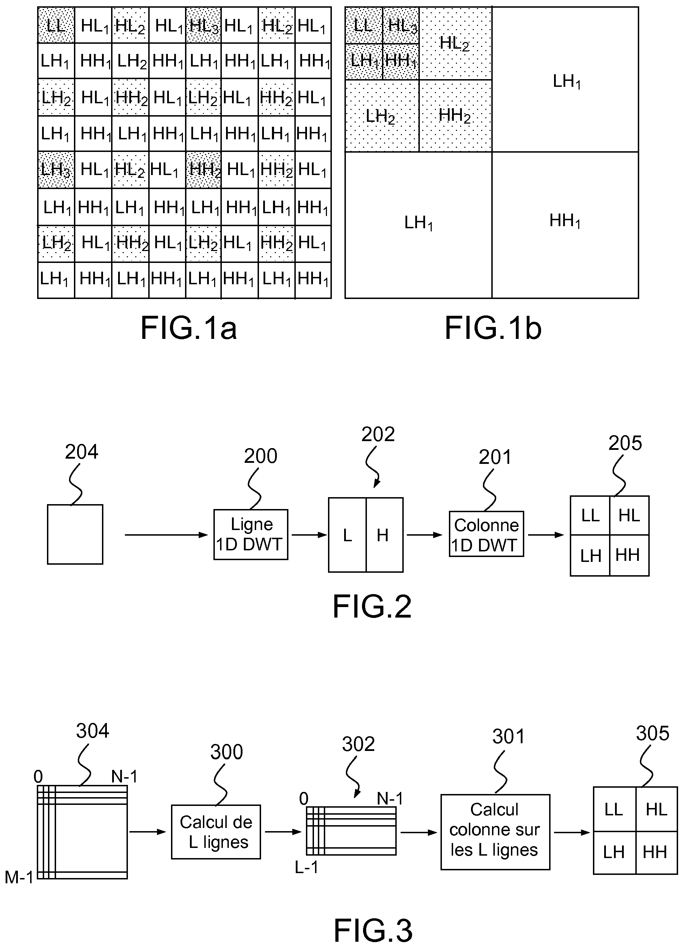

La figure 1a donne une représentation entrelacée de la décomposition d'une image. La figure 1b donne une représentation non entrelacée de la décomposition.

Les architectures de 2D DWT, acronyme venant de l'expression anglo-saxonne « Discrète Wavelet Transform », peuvent être classifiées selon deux approches différentes. La première approche est appelée « ligne-colonne » et la seconde approche est appelée « par ligne ».

La figure 2 illustre l'approche de décomposition ligne-colonne. L'opération est divisée en deux transformées 1D, l'une étant horizontale 200 et l'autre verticale 201. L'opération de transformée horizontale 200 est appliquée en premier sur une image d'entrée 204. Les coefficients transformés sont placés dans une mémoire temporaire 202 de taille N x M correspondant à la taille de l'image initiale. L'opération de transformée verticale 201 est alors appliquée dans un second temps et permet l'obtention d'une image finale 205. Cette structure présente l'avantage d'être simple à implémenter, les deux transformées 200, 201 étant totalement indépendantes. Un inconvénient majeur de cette méthode concerne la grande quantité de mémoire nécessaire par ce type d'implémentation. Cette mémoire exclusivement réservée à l'opération de transformée est de taille $N \times M$ et doit se trouver près des blocs de traitement pour éviter des coûts de lecture et d'écriture des coefficients. Cette mémoire augmente de manière significative la surface totale du composant réalisant le codage. En conséquence, ce type de structure est peu utilisé en pratique.

La figure 3 illustre schématiquement ce qu'est une transformée par ligne. Ce type de transformée permet de diminuer le coût en mémoire intermédiaire. En effet, dans ce type d'implémentation, une mémoire de lignes 302 de taille $L \times M$ où L est la taille du filtre utilisé. Cette mémoire remplace la mémoire d'image et permet de mémoriser temporairement les coefficients produits par le bloc de transformée horizontale 300. A titre d'exemple, L=3 pour l'ondelette CDF 5/3.

L'opération de transformée verticale 301 est alors déclenchée aussitôt que le nombre de ligne en mémoire est suffisant pour appliquer le filtre vertical. Ce type d'implémentation permet de passer d'une mémoire d'image de taille $N \times M$ à une mémoire de lignes de taille $L \times M$. Pour la transformée 9/7, il est nécessaire de stocker cinq lignes de coefficients. Seulement 4 lignes de coefficients sont nécessaires dans certaines architectures. Un inconvénient inhérent à l'utilisation d'une telle méthode est qu'un contrôle plus fin est nécessaire, que ce soit au niveau des lectures et écritures dans la mémoire tampon 302 ou bien au niveau du déclenchement de la transformée verticale 301.

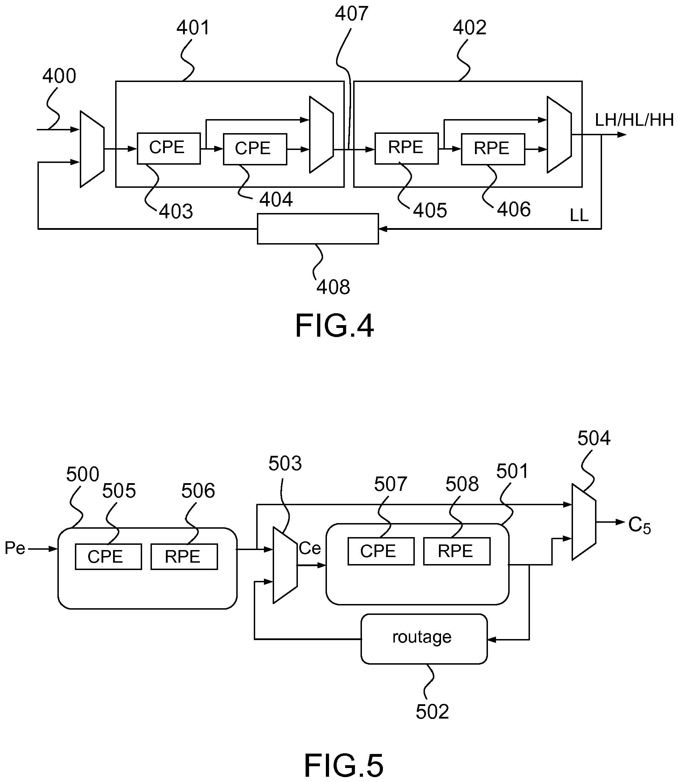

La figure 4 donne un exemple d'architecture ne nécessitant aucune mémoire intermédiaire pour le stockage des coefficients d'ondelettes entre les passes verticales et horizontales.

Une architecture permettant de réduire les besoins en mémoire a été proposée dans l'article de Peng Cao, ChaoWang, Jun Yang et Longxing Shi intitulé Area-efficient line-based twodimensional discrete wavelet transform architecture without data buffer, ICME 2009, IEEE International Conférence on Multimedia and Expo, pages 1094-1097, 28, 3 juillet 2009. Cette architecture ne nécessite aucune mémoire intermédiaire pour le stockage des coefficients d'ondelettes entre les passes verticales et horizontales, mémoire dite de transposition. Elle permet aussi d'effectuer une décomposition 5/3 ou 9/7, directe ou inverse selon la configuration. Les pixels d'entrée 400 sont scannés ligne par ligne, un pixel étant transmis à chaque cycle de calcul. Deux modules élémentaires 401, 402 sont mis en œuvre. Un premier module 401 effectue la transformée verticale grâce à des éléments de calcul 403, 404 CPE (Column Processing Element). Un second module 402 recevant les résultats 407 du bloc précédent 401 effectue la transformée horizontale grâce à des éléments de calcul 405, 406 RPE (Row Processing Element). Les coefficients d'approximation produits sont mémorisés 408 dans une mémoire RAM (Random Access Memory) pour effectuer le niveau de décomposition suivant. Encore une fois, un problème de mémoire se pose. Dans cet exemple, un quart d'image doit être mémorisé dans la mémoire RAM 408.

Dans l'article de H. Liao, M.K. Mandai, and B.F. Cockburn intitulé Efficient architectures for 1-d and 2-d lifting-based wavelet transforms, IEEE Transactions on Signal Processing, 52(5) : 1315-1326, 2004, il est proposé d'effectuer une décomposition 2D multi-niveaux grâce à une implémentation récursive de la transformée DWT. Le module de transformée est composé de deux blocs de transformée 1D horizontale et verticale, séparés par plusieurs FIFO servant à mémoriser les coefficients de chaque niveau. Ces FIFO servent à accumuler un nombre suffisant de coefficients pour que la transformée par colonne puisse s'exécuter, et ce pour chaque niveau de transformée. Il a été choisi de n'effectuer le traitement du premier niveau de décomposition qu'un cycle de calcul sur deux afin de pouvoir insérer les niveaux de décomposition supérieurs entre les décompositions de premier niveau. Bien que l'architecture ne requière au final que quatre lignes de mémoire temporaire pour effectuer la transformée CDF 9/7, un contrôle complexe est nécessaire afin de gérer les différentes FIFO mais aussi les registres de temporisation. Cette architecture effectue la décomposition multi niveaux d'une image en ordonnant les tâches de décomposition liées aux différents niveaux sur une même ligne. Puisque tous les niveaux de décomposition peuvent être traités sur une même ligne, le bloc de décomposition est utilisé intensément lors du traitement de ces lignes, et pas du tout lors des lignes suivantes où il n'est pas nécessaire d'effectuer plusieurs niveaux de décomposition. Il est aussi nécessaire de reconfigurer le chemin de données des blocs de traitement à chaque cycle de calcul lors des lignes de transformée en fonction du niveau de décomposition courant. De plus, il est nécessaire d'augmenter le nombre de registres de stockage au sein des blocs de décomposition horizontaux et d'y développer un adressage spécifique afin de ne pas écraser des coefficients intermédiaires à l'intérieur même d'une ligne. Un tel choix augmente donc fortement la longueur du chemin critique, et diminue les performances globales du module de transformée. Cette architecture utilise deux lignes de mémoire afin de temporiser les données produites entre les différents niveaux de décomposition et un mécanisme complexe est mis en œuvre pour charger et décharger les coefficients au sein de ces mémoires.

De nombreuses applications embarquées nécessitent la mise en œuvre de transformées en ondelettes. Il est donc important de trouver des architecture permettant de réduire la taille de mémoire requise, et ce avec une complexité d'implémentation la plus faible possible.

Dans la suite de la description, les filtres CDF 5/3 et CDF 9/7 sont utilisés comme exemples. Il s'agit de filtres d'ondelettes inventés par Cohen, Daubechies et Fauveau. Chacun de ces filtres a des propriétés spécifiques. Le filtre 5/3 permet une compression et décompression sans pertes. Le filtre 9/7 offre un meilleur taux de compression mais introduit des pertes. La taille équivalente de ces filtres est de trois coefficients pour le 5/3 et cinq coefficients pour le 9/7. Même si ces deux filtres sont pris en exemple, l'invention peut être mise en œuvre en utilisant tous type de filtres.

Un but de l'invention est notamment de pallier les inconvénients précités.

A cet effet l'invention a pour objet un dispositif de décomposition d'images en au moins trois niveaux par transformée en ondelettes, comprenant un premier bloc mettant en œuvre un premier niveau de décomposition et un second bloc mettant en œuvre les niveaux de décomposition supérieurs en exécutant une succession de tâches de traitement. Lesdites tâches sont ordonnancées dans le temps en utilisant une succession de lignes, un bloc de routage ayant pour fonction de configurer le second bloc lorsque le niveau de décomposition associé à la tâche de traitement en cours d'exécution change par rapport au niveau de décomposition associé à la tâche de traitement exécuté auparavant. Les tâches de traitement sont ordonnancées de manière à ce qu'une ligne donnée ne soit associée qu'à un unique niveau de décomposition.

Selon un aspect de l'invention, les tâches de traitement associées au niveau deux de décomposition sont effectuées une ligne sur deux, les tâches de traitement associées aux niveaux supérieurs étant effectuées sur les autres lignes.

Selon un autre aspect de l'invention, un ensemble de variables servant de référence temporelle est déterminé et mis à jour périodiquement par le second bloc de décomposition, cet ensemble de variables correspondant aux index de la ligne courante et de la colonne courante traités par le second bloc de décomposition.

A titre d'exemple, le bloc de routage génère en début de ligne un signal de configuration à destination du second bloc de décomposition de manière à paramétrer le chemin de données de modules de traitement le composant.

Selon un autre aspect de l'invention, une ligne est référencée par un indice de ligne j, ledit indice étant initialisé à zéro lorsque la première ligne de coefficients de décomposition générés par le premier bloc de décomposition arrive en entrée du second bloc de décomposition.

Les lignes d'indice j vérifiant l'expression suivante sont par exemple réservées au niveau k de transformée :

$$\{j - (2^{k-2} - 1)\}\%2^{k-1} = 0$$

dans laquelle % représente l'opérateur modulo.

Dans un mode de réalisation, l'indice de ligne j est représenté en base deux, le niveau de décomposition courant étant déterminé en déterminant le nombre de « un » consécutifs dans le sens allant du bit de poids faible au bit de poids fort.

L'invention a aussi pour objet un procédé d'ordonnancement des tâches de traitement mises en œuvre dans le second bloc de traitement d'un dispositif tel que décrit précédemment comprenant les étapes suivantes :

a. détermination du niveau de décomposition courant ;
b. détermination de la parité de la ligne courante en fonction du niveau de décomposition;
c. vérification visant à déterminer si une tâche de traitement doit être exécutée ;
d. acquisition des coefficients d'entrée pour la tâche de traitement à exécuter ;
e. exécution de la tâche de traitement et génération d'un coefficient de sortie.

L'invention a aussi pour objet un programme d'ordinateur comportant des instructions pour l'exécution du procédé d'ordonnancement, lorsque le programme est exécuté par un processeur.

D'autres caractéristiques et avantages de l'invention apparaîtront à l'aide de la description qui suit donnée à titre illustratif et non limitatif, faite en regard des dessins annexés parmi lesquels :

- la figure 1 illustre le procédé selon l'invention TBC ;
- la figure 1a donne une représentation entrelacée de la décomposition d'une image ;
- la figure 1b donne une représentation non entrelacée de la décomposition d'une image ;
- la figure 2 illustre le principe de la décomposition ligne-colonne ;
- la figure 3 illustre schématiquement ce qu'est une transformée par ligne ;
- la figure 4 donne un exemple d'architecture ne nécessitant aucune mémoire intermédiaire pour le stockage des coefficients d'ondelettes entre les passes verticales et horizontales ;
- la figure 5 donne un exemple d'architecture de transformée en ondelettes multi-niveaux comportant un bloc de décomposition replié ;
- la figure 6 donne un exemple de module de traitement par ligne RPE ;
- la figure 7 donne un exemple de module de traitement par colonne RCE ;

- la figure 8 illustre une première technique de gestion du repliement visant à répartir sur une même ligne les tâches de traitements liées aux différents niveaux de décomposition ;
- la figure 9 illustre une seconde technique de gestion du repliement visant à une répartition optimale des opérations de transformée multi-niveau ;
- la figure 10 donne un exemple de mise en œuvre du procédé de gestion du repliement selon l'invention.

La figure 5 donne un exemple d'architecture de transformée en ondelettes multi-niveaux. Cette architecture présente à la fois un aspect déplié et un aspect replié. Elle présente un aspect replié dans le sens où plusieurs niveau de décomposition sont traités par un même bloc de décomposition et un aspect déplié car des blocs de décomposition simple niveau sont chaînés afin d'obtenir une décomposition multi-niveaux.

En d'autres termes, une partie du matériel est dupliquée ce qui implique la mise en œuvre de deux blocs de décomposition mais une autre partie du matériel est réutilisée. En effet, l'un des deux blocs de traitement est utilisé afin de mettre en œuvre plusieurs niveaux de décomposition. Cela est rendu possible grâce à l'utilisation d'un réseau de routage.

Dans l'exemple présenté à l'aide de la figure 5, deux blocs de décomposition sont considérés. Comme expliqué précédemment, le premier bloc de décomposition 500 est en charge de la décomposition du premier niveau. Il comprend des modules de traitement par colonne 505 et par ligne 506 sur les pixels Pe de l'image d'entrée. Le second bloc de décomposition 501 est en charge de la décomposition de tous les niveaux suivants. Il comprend également des modules de traitements par colonne 507 et par ligne 508 sur les coefficients Ce qui lui sont présentés en entrée.

Un multiplexeur 503 est utilisé de manière à sélectionner comme coefficients d'entrée du second bloc le résultat de la décomposition de niveau un lorsque le bloc 502 met en œuvre la décomposition de niveau deux. Lorsque le bloc 502 met en œuvre une décomposition d'un niveau supérieur à deux, le multiplexeur 503 sélectionne les échantillons fournis par un réseau de routage 502. Le réseau de routage utilise comme entrées les coefficients résultant des décompositions effectuées par le module 501.

Un multiplexeur 504 a pour fonction de sélectionner les coefficients Cs à la sortie de l'architecture. Ainsi, lorsque la décomposition de niveau un est en cours, c'est la sortie du bloc 500 qui est sélectionnée alors que lorsque la décomposition de niveau deux ou supérieur est en cours, c'est la sortie du bloc 502 qui est sélectionnée.

Avantageusement, cette architecture permet une utilisation matérielle optimisée avec des besoins en mémoire interne faibles.

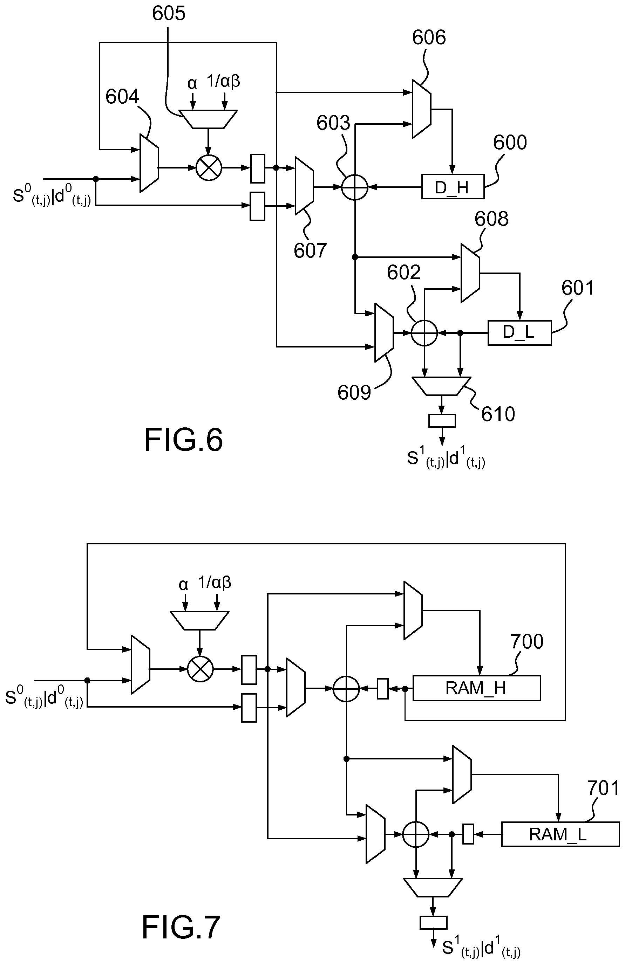

La figure 6 donne un exemple de module de traitement par ligne RPE pouvant être utilisé pour la décomposition de niveau un.

La transformée en ondelettes 2D est obtenue par application successive de transformées verticales puis horizontales, sans mémoire tampon intermédiaire. Le bloc de transformée RPE (Row Processing Element) effectue la transformée horizontale. Il intègre deux registres 600, 601 afin de mémoriser les coefficients intermédiaires nécessaires aux calculs. Deux opérateurs d'addition 602, 603 ainsi qu'un opérateur de décalage 3 bits sont utilisés pour le calcul des coefficients. Le contrôle des opérations et des chemins est assuré par des multiplexeurs 604, 605, 606, 607, 608 dont l'état dépend de la parité de la ligne en cours.

La figure 7 donne un exemple de module de traitement par colonne RCE pouvant être utilisé pour la décomposition de niveau un. Ce bloc est dédié à la transformée verticale. Il est ressemble au bloc de transformée horizontale, les deux registres 600, 601 étant remplacés par deux mémoires de ligne 700, 701 autorisant un accès en lecture et un accès en écriture par cycle.

Pour ce qui est de la décomposition des niveaux supérieurs et comme explicité précédemment, un second bloc de décomposition 501 est en charge des niveaux supérieurs à deux. Des modules de traitement CPE et RPE identiques à ceux présentés à l'aide des figures 6 et 7 peuvent être utilisés. En outre, le second bloc de décomposition 501 embarque une mémoire interne de deux lignes, suffisante pour mémoriser tous les coefficients intermédiaires des différents niveaux de décomposition. Ce bloc de décomposition adopte une structure repliée. Du fait de cette structure, les tâches de calcul correspondant aux différents niveaux de décomposition doivent être ordonnancées.

Les coefficients d'approximation produits par le premier bloc de décomposition 500 sont disponibles une ligne sur deux, par exemple les lignes d'indices pairs.

Afin de limiter l'utilisation de mémoires intermédiaires, les coefficients d'approximation produits par le premier bloc 500 mettant en œuvre le premier niveau de décomposition doivent être utilisés directement par le deuxième bloc de décomposition 501, c'est-à-dire sans stockage intermédiaire.

Un contexte local est associé au deuxième bloc de décomposition 501 afin de lui permettre d'ordonnancer les tâches qu'il a à effectuer. Ce contexte local constitue une référence et correspond par exemple aux index de la ligne et de la colonne en cours de traitement par le second bloc de décomposition 501.

Si une transformée utilisant un filtre CDF 5/3 est utilisé, une latence de deux lignes est introduite. En effet, il faut trois coefficients d'entrée pour produire un coefficient filtré. Si le filtre est appliqué horizontalement, deux coefficients d'entrée sont à mémoriser. Dès que le troisième est disponible, un coefficient de sortie est produit. Il y a donc une latence de deux coefficients. Si le filtre est appliqué verticalement, il faut mémoriser deux lignes de coefficients. Ainsi, dès que la lecture de la troisième ligne commencera, des coefficients de sortie seront produits par filtrage des coefficients d'entrée. Dans le cas d'un filtrage 2D, la latence est donc de deux lignes et de deux coefficients (colonnes).

Bien que les premiers coefficients fournis en sortie du premier bloc de décomposition 500 soient disponibles à la ligne trois, il est par exemple considéré par convention que la première ligne de coefficients est disponible à la ligne zéro du bloc 501. Pour cela, le contexte local doit être initialisé en conséquence.

Comme déjà expliqué, les coefficients d'entrée Ce du second bloc de décomposition 501 peuvent provenir de deux sources distinctes. La première source correspond au premier bloc de décomposition 500. Dans ce cas, le traitement est effectué dans le flux et les données sortantes du bloc 500 sont directement envoyées au bloc 501, aucune mémoire n'étant requise. Les données d'entrée du second bloc de décomposition 501 peuvent aussi provenir du bloc réseau de routage mettant en œuvre une boucle de retour. Dans ce cas, les coefficients à traiter sont lus dans le réseau de routage avant d'être traités.

Le contrôle des données à l'entrée de ce bloc est donc assuré par le multiplexeur 503 dont la configuration dépend du niveau de décomposition en cours.

Les données présentées en sortie du second bloc de décomposition 501 peuvent être soit envoyées au réseau de routage 502, soit envoyées en sortie du circuit pour y être mémorisées dans une mémoire de sortie par exemple. Cette décision repose sur le niveau de décomposition en cours, mais aussi de la parité de la ligne et de la colonne courante.

Les coefficients d'approximation doivent soit être envoyés en sortie du circuit, soit envoyés au réseau de routage afin d'y appliquer ultérieurement un autre niveau de décomposition. Les coefficients d'approximations sont donc mémorisés dans une mémoire de ligne excepté pour le cas où le niveau de décomposition courant est égal au dernier niveau de décomposition. Une mémoire de ligne est une mémoire capable de mémoriser tous les coefficients d'une ligne donnée. On y accède par exemple grâce à l'indice de la colonne courant.

Une fois que les données sont disponibles à l'entrée du second bloc de décomposition 501, il est nécessaire de reconfigurer le chemin de données à l'intérieur dudit bloc afin d'appliquer le traitement adéquat.

Le module appelé « réseau de routage » 502 a donc deux fonctions. Une première fonction est de configurer le chemin de données en configurant les multiplexeurs des blocs RPE et CPE. Une seconde fonction est de mémoriser les coefficients d'approximation comme mentionné précédemment et de les fournir au second bloc de décomposition 501 pour un niveau de décomposition ultérieur.

Pour cela, deux signaux sont par exemple envoyés au module de décomposition.

Le premier est un signal qui active ou désactive le module RPE ou CPE. Ce premier signal correspond par exemple à un bit à « 0 » pour désactiver un module et à « 1 » pour activer un module.

Le second signal comporte l'information de parité de la ligne en cours de traitement en tenant compte du niveau de décomposition courant. Ce second signal correspond par exemple à un bit à « 0 » pour une ligne paire à « 1 » pour une ligne impaire. La parité de la ligne est déterminée une fois que le niveau de décomposition en cours a été trouvé.

Deux techniques de gestion du repliement mis en œuvre par le réseau de routage sont décrites ci-après et comparés.

Une première technique de gestion du repliement a pour objectif de réaliser tous les traitements sur une même ligne. Pour cela il est nécessaire de considérer la latence de ligne induite par la traversée des différents registres de mémorisation du module de transformée horizontale du second bloc de décomposition 501.

De même qu'il existe une latence de deux lignes, il existe aussi une latence de deux colonnes pendant lesquelles les coefficients produits ne sont pas valides. Si un filtre CDF 5/3 est utilisé, le premier coefficient valide produit par le bloc 501 est disponible à la troisième ligne, troisième colonne. Il est dès lors possible de propager le coefficient produit directement à l'entrée du bloc et de le traiter dans le cycle suivant, le bloc 501 étant pour le moment inactif pour les indices de colonne impairs.

Une seconde technique vise à répartir dans le temps les opérations de transformée multi-niveaux. Pour cela, certaines lignes sont réservées pour les traitements de décomposition de niveau deux et d'autres lignes le sont pour les traitements de décomposition de niveaux supérieurs.

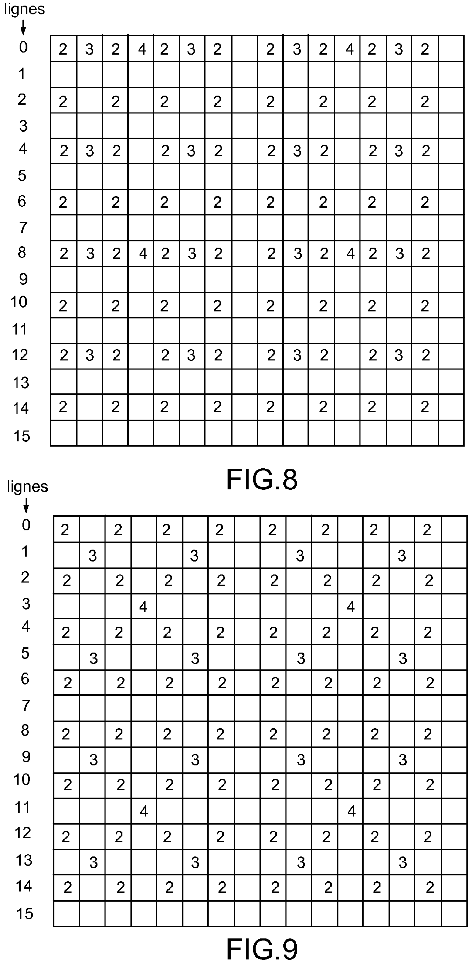

La figure 8 illustre une première technique de gestion du repliement visant à répartir sur une même ligne les tâches de traitements liées aux différents niveaux de décomposition.

Dans cet exemple représentatif d'une technique appartenant à l'art antérieur, les traitements correspondants à tous les niveaux de décomposition seront effectués dans une même ligne.

L'avantage d'une telle répartition en ligne des tâches de décomposition réside principalement dans le fait qu'il n'y a pas de besoin de mémorisation des coefficients produits puisque ceux-ci sont directement propagés à travers le réseau. Cependant, l'adoption d'une telle répartition des tâches de décomposition présente plusieurs inconvénients. Etant donné que tous les niveaux de décomposition sont exécutés sur les lignes paires, l'activité du second bloc de décomposition 501 est élevée lors du traitement de ces lignes alors qu'elle est nulle pour ce qui concerne les lignes impaires.

Il est par ailleurs nécessaire de reconfigurer le chemin de donnée des blocs de traitement à chaque cycle de calcul lors des lignes de transformée. De plus, il est nécessaire d'augmenter le nombre de registres de temporisation au sein du module 508 de traitement RPE et d'y développer un adressage spécifique afin de ne pas écraser des coefficients intermédiaires à l'intérieur même d'une ligne. Un tel choix augmente la longueur du chemin critique et diminue les performances globales du circuit réalisant la transformée.

La figure 9 illustre une seconde technique de gestion du repliement visant à une répartition optimale des opérations de transformée multi-niveau.

Comme souligné précédemment, la concentration dans une même ligne des tâches de décomposition associées à des niveaux différents présente de nombreux inconvénients. Un des objectifs de l'invention est de mettre en œuvre une répartition des tâches correspondantes aux différents niveaux de décomposition sur l'ensemble des lignes.

Dans un mode de réalisation préféré, le second niveau de décomposition est effectué sur des lignes paires et les traitements associés aux niveaux de décomposition suivants sont effectués sur les lignes impaires. Bien sûr, le fait qu'une ligne soit paire ou impaire dépend de la valeur d'indice lui ayant été associé.

Plus généralement, les tâches de traitement associées au niveau deux de décomposition sont effectuées une ligne sur deux, les tâches de traitement associées aux niveaux supérieurs étant effectuées sur les autres lignes. L'invention met en œuvre un principe essentiel. Les tâches sont ordonnancées de manière à ce qu'une ligne donnée ne soient associées qu'à un unique niveau de décomposition. Cela présente l'avantage fondamental de réduire l'occurrence des opérations de reconfiguration. En d'autres termes, cela permet de ne reconfigurer le chemin de données qu'en début de ligne, évitant ainsi d'avoir un impact trop important sur les performances.

Afin de mettre en œuvre cette répartition intelligente des traitements, une mémoire de temporisation appelée aussi mémoire de ligne est utilisée. Cette mémoire est en charge de mémoriser les coefficients d'approximation générés par le second bloc de traitement 501 afin qu'ils puissent être utilisés dans les lignes suivantes.

Chaque bloc de traitement peut avoir son propre contexte d'indice de ligne et de colonne. Il peut être par exemple choisi par convention de faire correspondre l'arrivée de la première ligne de coefficients valides présentés à l'entrée du second bloc de décomposition 501 l'indice de ligne zéro.

Toutes les lignes paires sont alors réservées au traitement du second niveau de transformation. Les lignes impaires peuvent alors être affectées au traitement des niveaux de transformation supérieurs.

Le traitement de niveau K ne peut commencer que lorsque les premiers coefficients d'approximation du niveau K-1 sont disponibles. Ainsi, le traitement du troisième niveau de transformée ne peut commencer qu'après la ligne quatre, pour laquelle sont disponibles les premiers coefficients d'approximation valides du niveau deux. La ligne cinq est donc réservée à la transformation de niveau trois. Il en est de même pour la ligne neuf. Les premiers coefficients d'approximation valides à la sortie du niveau trois sont disponibles aux lignes treize et vingt-et-un, les lignes dix-neuf et vingt-sept sont consacrées à la transformée de niveau quatre.

Différentes architectures permettant d'effectuer une décomposition 2D multi-niveaux en utilisant les filtres CDF 5/3 et CDF 9/7 peuvent être considérées. Il existe des implémentations de telles architectures sur des cibles architecturales diverses de type ASIC (*Application-Specific Integrated Circuit),* FPGA (*Field-Programmable Gate Array*), DSP (Digital Signal Processor), GPU (*Graphics Processing Unit*) voire GPP (General Purpose Processor).

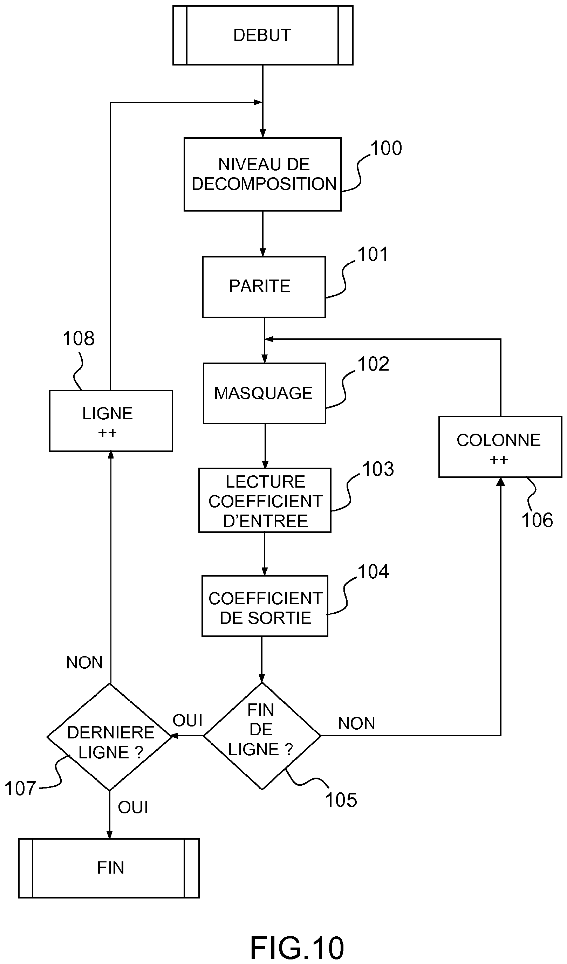

La figure 10 donne un exemple de mise en œuvre du procédé de gestion du repliement selon l'invention.

Une première étape 100 est appliquée en début de ligne et a pour objectif de déterminer le niveau de décomposition en cours. Pour cela la représentation binaire de l'indice de ligne peut être utilisée. La position du premier « 0 » en lisant le mot de droite (LSB) à gauche (MSB) permet de connaître le niveau de décomposition en cours.

De manière générale, les lignes d'indice j vérifiant l'expression suivante sont réservées au niveau k de transformée :

$$\{j - (2^{k-2} - 1)\}\%2^{k-1} = 0$$

dans laquelle % représente l'opérateur modulo.

Il est souhaitable de pouvoir déterminer le plus rapidement possible le niveau de décomposition en fonction de l'indice de ligne afin de reconfigurer le chemin de données. Pour cela, il est possible de tenir compte dans la représentation binaire de l'indice de ligne du nombre de « 1 » logiques consécutifs avant le premier « 0 », et ce dans le sens allant du bit de poids faible LSB (Least Significant Bit) au bit de poids fort MSB (Most Significant Bit).

Si aucun « 1 » n'est détecté dans la représentation binaire de l'indice de ligne, cela signifie que la ligne courante correspond au second niveau de décomposition.

Si deux « 1 » consécutifs sont détectés, cela signifie que le niveau de transformée courant est égal à quatre.

Le tableau suivant illustre cette technique dans le cas où l'indice de ligne est encodé sur huit bits. Il est ainsi possible de faire correspondre le nombre de « 1 » consécutifs détectés à niveau de décomposition donné.

| représentation binaire | | | | | | | | k |
|---|---|---|---|---|---|---|---|---|
| X | X | X | X | X | X | X | 0 | 2 |
| X | X | X | X | X | X | 0 | 1 | 3 |
| X | X | X | X | X | 0 | 1 | 1 | 4 |

(suite)

| représentation binaire | | | | | | | | k |
|---|---|---|---|---|---|---|---|---|
| X | X | X | X | 0 | 1 | 1 | 1 | 5 |
| X | X | X | 0 | 1 | 1 | 1 | 1 | 6 |
| X | X | 0 | 1 | 1 | 1 | 1 | 1 | 7 |

Dans une deuxième étape 101, la parité de la ligne courante est déterminée en fonction du niveau de décomposition. Cela peut être effectué en analysant l'indice de ligne. En tenant compte du niveau de décomposition courant, la parité de la ligne courante peut être déduite. Cela est possible en regardant la valeur du bit qui suit le premier « 0 ». Si c'est un « 0 » la ligne est paire, sinon la ligne est impaire

Le module de traitement CPE peut alors être configuré. Avantageusement, le chemin de calcul de ce module de traitement ne sera plus modifié d'ici la fin de la ligne.

Dans une troisième étape 102, il est vérifié si une opération de décomposition doit être effectuée pour la colonne pointée par le contexte local. Pour cela, une opération binaire de type masquage peut être réalisée entre le niveau de décomposition et l'indice de colonne afin de déterminer si une tâche de traitement doit être effectuée.

Lorsqu'une opération de décomposition doit être effectuée, une étape 103 d'acquisition d'un coefficient d'entrée est mise en œuvre. Ce coefficient est obtenu soit du réseau de routage (k>=3) soit du premier bloc de décomposition 500 (sortie du premier bloc de traitement lorsque k=2). La provenance du coefficient dépend du niveau de décomposition.

Dans une cinquième étape, un coefficient de sortie 104 est produit suite au traitement des coefficients d'entrée sélectionnés. Selon le niveau de décomposition, le coefficient est soit réécrit dans la mémoire de ligne du réseau de routage, soit envoyé à la sortie du bloc.

Il est ensuite vérifié 105 si on est en fin de ligne. Si ce n'est pas le cas, le cotexte local est mis à jour de sorte que l'indice de colonne soit incrémenté 106 et le procédé reprend à l'étape 102. Si c'est le cas, il est alors vérifié 107 si la ligne courante est la dernière ligne de la décomposition. Si c'est le cas l'exécution du procédé est terminée. Si la ligne courante n'est pas la dernière ligne, l'indice de ligne est incrémenté 103 le procédé reprend à l'étape 100.

**Revendications**

1. Dispositif sans mémoire de stockage intermédiaire pour la décomposition d'images en au moins trois niveaux par transformée en ondelettes, comprenant un premier bloc (500) mettant en œuvre un premier niveau de décomposition et

un second bloc (501) mettant en œuvre les niveaux de décomposition supérieurs en exécutant une succession de tâches de traitement, lesdites tâches étant ordonnancées dans le temps en utilisant une succession de lignes,

un bloc de routage (502) ayant pour fonction de configurer le second bloc (501) lorsque le niveau de décomposition associé à la tâche de traitement en cours d'exécution change par rapport au niveau de décomposition associé à la tâche de traitement exécuté auparavant, les tâches de traitement étant ordonnancées de manière à ce qu'une ligne donnée ne soit associée qu'à un unique niveau de décomposition.

2. Dispositif selon la revendication 1 dans lequel les tâches de traitement associées au niveau deux de décomposition sont effectuées une ligne sur deux, les tâches de traitement associées aux niveaux supérieurs étant effectuées sur les autres lignes.

3. Dispositif selon l'une des revendications précédentes dans lequel un ensemble de variables servant de référence temporelle est déterminé et mis à jour périodiquement par le second bloc de décomposition (501), cet ensemble de variables correspondant aux index de la ligne courante et de la colonne courante traités par le second bloc de décomposition (501).

4. Dispositif selon l'une des revendications précédentes dans lequel le bloc de routage (502) génère en début de ligne un signal de configuration à destination du second bloc de décomposition (501) composé de modules de traitement (507, 508) de manière à paramétrer le chemin de données desdits modules .

5. Dispositif selon l'une des revendications précédentes dans lequel une ligne est référencée par un indice de ligne j, ledit indice étant initialisé à zéro lorsque la première ligne de coefficients de décomposition générés par le premier bloc de décomposition (500) arrive en entrée du second bloc de décomposition (501).

6. Dispositif selon la revendication 5 dans lequel les lignes d'indice j vérifiant l'expression suivante sont réservées au niveau k de transformée :

$$\{j - (2^{k-2} - 1)\}\%2^{k-1} = 0$$

dans laquelle % représente l'opérateur modulo.

7. Dispositif selon l'une des revendications précédentes dans lequel l'indice de ligne j est représenté en base deux, le niveau de décomposition courant étant déterminé en déterminant le nombre de « un » consécutifs dans le sens allant du bit de poids faible au bit de poids fort.

8. Procédé d'ordonnancement des tâches de traitement mises en œuvre dans le second bloc de traitement (501) d'un dispositif selon l'une quelconque des revendications précédentes comprenant les étapes suivantes :

  a. détermination (100) du niveau de décomposition courant ;
  b. détermination (101) de la parité de la ligne courante en fonction du niveau de décomposition;
  c. vérification (102) visant à déterminer si une tâche de traitement doit être exécutée ;
  d. acquisition (103) des coefficients d'entrée pour la tâche de traitement à exécuter ;
  e. exécution de la tâche de traitement et génération d'un coefficient de sortie (104)

9. Programme d'ordinateur comportant des instructions pour l'exécution du procédé d'ordonnancement selon la revendication 8, lorsque le programme est exécuté par un processeur.

**Patentansprüche**

1. Vorrichtung ohne Zwischenspeicher zum Zerlegen von Bildern in mindestens drei Ebenen durch Transformieren in Wavelets, die Folgendes umfasst:

  einen ersten Block (500), der eine erste Zerlegungsebene implementiert, und
  einen zweiten Block (501), der die höheren Zerlegungsebenen durch Ausführen einer Folge von Verarbeitungsaufgaben implementiert, wobei die Aufgaben in der Zeit durch Nutzen einer Folge von Zeilen angeordnet werden,
  einen Routing-Block (502) mit der Funktion des Konfigurierens des zweiten Blocks (501), wenn sich die mit der Verarbeitungsaufgabe assoziierte Zerlegungsebene im Laufe der Ausführung mit Bezug auf die mit der zuvor ausgeführten Verarbeitungsaufgabe assoziierte Zerlegungsebene ändert, wobei die Verarbeitungsaufgaben so angeordnet werden, dass eine gegebene Zeile nur mit einer einzigen Zerlegungsebene assoziiert wird.

2. Vorrichtung nach Anspruch 1, bei der die mit Zerlegungsebene zwei assoziierten Verarbeitungsaufgaben jede zweite Zeile durchgeführt werden, wobei die mit den höheren Ebenen assoziierten Verarbeitungsaufgaben auf den anderen Zeilen durchgeführt werden.

werden.

3. Vorrichtung nach einem der vorherigen Ansprüche, bei der ein Satz von Variablen, die als zeitliche Referenz dienen, durch den zweiten Zerlegungsblock (501) bestimmt und periodisch aktualisiert wird, wobei dieser Satz von Variablen den Indexen der laufenden Zeile und der laufenden Spalte entsprechen, die durch den zweiten Zerlegungsblock (501) verarbeitet werden.

4. Vorrichtung nach einem der vorherigen Ansprüche, bei der der Routing-Block (502) am Zeilenanfang ein Konfigurationssignal zum zweiten Zerlegungsblock (501) erzeugt, bestehend aus Verarbeitungsmodulen (507, 508), um den Datenweg der Module zu parametrisieren.

5. Vorrichtung nach einem der vorherigen Ansprüche, bei der eine Zeile durch einen Zeilenindex j referenziert wird, wobei der Index auf null initialisiert wird, wenn die erste Zeile von durch den ersten Zerlegungsblock (500) erzeugten Zerlegungskoeffizienten am Eingang des zweiten Zerlegungsblocks (501) ankommt.

6. Vorrichtung nach Anspruch 5, bei der die Zeilen mit Index j, die den folgenden Ausdruck verifizieren, auf Ebene k von Transformanten reserviert werden:

$$\{j - (2^{k-2} - 1)\}\%2^{k-1} = 0$$

wobei % den Modulo-Operator repräsentiert.

7. Vorrichtung nach einem der vorherigen Ansprüche, bei der der Index von Zeile j in Basis zwei repräsentiert wird, wobei die laufende Zerlegungsebene durch Bestimmen der Anzahl von konsekutiven "einsen" in der Richtung vom schwächsten Bit zum stärksten Bit bestimmt wird.

8. Verfahren zum Anordnen von Verarbeitungsaufgaben, implementiert im zweiten Verarbeitungsblock (501) einer Vorrichtung nach einem der vorherigen Ansprüche, das die folgenden Schritte beinhaltet:

  a. Bestimmen (100) der laufenden Zerlegungsebene;
  b. Bestimmen (101) der Parität der laufenden Zeile in Abhängigkeit von der Zerlegungsebene;
  c. Verifizieren (102) mit dem Ziel festzustellen, ob eine Verarbeitungsaufgabe ausgeführt werden muss;
  d. Erfassen (103) von Eingangskoeffizienten für die auszuführende Verarbeitungsaufgabe;
  e. Ausführen der Verarbeitungsaufgabe und Erzeugen eines Ausgangskoeffizienten (104).

9. Computerprogramm, das Befehle zur Ausführung des Anordnungsverfahrens nach Anspruch 8 umfasst, wenn das Programm von einem Prozessor ausgeführt wird.

**Claims**

1. A device without intermediate storage memory for decomposing images into at least three levels by wavelet transform, comprising:

   a first unit (500) executing a first level of decomposition; and
   a second unit (501) implementing the higher levels of decomposition by implementing a series of processing tasks, said tasks are ordered in time by using a sequence of rows,
   a routing unit (502) serving to configure the second unit (501) when the level of decomposition associated with the processing task currently being executed changes relative to the level of decomposition associated with the processing task executed previously, the processing tasks being ordered so that any given row is associated with only a single level of decomposition.

2. The device as claimed in claim 1, wherein the processing tasks associated with level two of decomposition are executed on every second row, the processing tasks associated with the higher levels being executed on the other rows.

3. The device as claimed in any of the preceding claims, wherein a set of variables used as a time reference is determined and periodically updated by the second decomposition unit (501), this set of variables corresponding to the index of the current row and the current column processed by the second decomposition unit (501).

4. The device as claimed in any of the preceding claims, wherein the routing unit (502) generates a configuration signal at the start of a row, intended for the second decomposition unit (501) composed of processing modules (507, 508) in order to parameterize the data path of said modules.

5. The device as claimed in any of the preceding claims, wherein a row is referenced by a row index j, said index being initialized to zero when the first row of decomposition coefficients generated by the first decomposition unit (500) reaches the input of the second decomposition unit (501).

6. The device as claimed in claim 5, wherein the rows with the index j that satisfy the following expression are reserved at the transform level k:

$$\{j - (2^{k-2} - 1)\}\%2^{k-1} = 0$$

where % represents the modulo operator.

7. The device as claimed in any of the preceding claims, wherein the row index j is represented in base two, the current decomposition level being determined by determining the number of consecutive "one" in the direction from the less significant bit to the more significant bit.

8. A method for ordering the processing tasks implemented in the second processing unit (501) of a device as claimed in any one of the preceding claims, comprising the following steps:

   a) determining (100) the current decomposition level;
   b) determining (101) the parity of the current row as a function of the decomposition level;
   c) checking (102) to determine whether a processing task has to be executed;
   d) acquiring (103) the input coefficients for the processing task to be executed;
   e) executing the processing task and generating an output coefficient (104).

9. A computer program including instructions for executing the ordering method as claimed in claim 8 when the program is executed by a processor.

| LL | HL₁ | HL₂ | HL₁ | HL₃ | HL₁ | HL₂ | HL₁ |
| LH₁ | HH₁ | LH₂ | HH₁ | LH₁ | HH₁ | LH₁ | HH₁ |
| LH₂ | HL₁ | HH₂ | HL₁ | LH₂ | HL₁ | HH₂ | HL₁ |
| LH₁ | HH₁ | LH₁ | HH₁ | LH₁ | HH₁ | LH₁ | HH₁ |
| LH₃ | HL₁ | HL₂ | HL₁ | HH₂ | HL₁ | HH₂ | HL₁ |
| LH₁ | HH₁ | LH₁ | HH₁ | LH₁ | HH₁ | LH₁ | HH₁ |
| LH₂ | HL₁ | HH₂ | HL₁ | LH₂ | HL₁ | HH₂ | HL₁ |
| LH₁ | HH₁ | LH₁ | HH₁ | LH₁ | HH₁ | LH₁ | HH₁ |

## FIG.1a

| LL | HL₃ | HL₂ | LH₁ |
| LH₁ | HH₁ | | |
| LH₂ | HH₂ | | |
| LH₁ | | HH₁ | |

## FIG.1b

204 → 200 Ligne 1D DWT → 202 L H → 201 Colonne 1D DWT → 205 LL HL LH HH

## FIG.2

304 (0 ... N-1 / M-1) → 300 Calcul de L lignes → 302 (0 ... N-1 / L-1) → 301 Calcul colonne sur les L lignes → 305 LL HL LH HH

## FIG.3

FIG.4

FIG.5

FIG.6

FIG.7

lignes

| 0 | 2 | 3 | 2 | 4 | 2 | 3 | 2 |   | 2 | 3 | 2 | 4 | 2 | 3 | 2 |   |
|---|---|---|---|---|---|---|---|---|---|---|---|---|---|---|---|---|
| 1 |   |   |   |   |   |   |   |   |   |   |   |   |   |   |   |   |
| 2 | 2 |   | 2 |   | 2 |   | 2 |   | 2 |   | 2 |   | 2 |   | 2 |   |
| 3 |   |   |   |   |   |   |   |   |   |   |   |   |   |   |   |   |
| 4 | 2 | 3 | 2 |   | 2 | 3 | 2 |   | 2 | 3 | 2 |   | 2 | 3 | 2 |   |
| 5 |   |   |   |   |   |   |   |   |   |   |   |   |   |   |   |   |
| 6 | 2 |   | 2 |   | 2 |   | 2 |   | 2 |   | 2 |   | 2 |   | 2 |   |
| 7 |   |   |   |   |   |   |   |   |   |   |   |   |   |   |   |   |
| 8 | 2 | 3 | 2 | 4 | 2 | 3 | 2 |   | 2 | 3 | 2 | 4 | 2 | 3 | 2 |   |
| 9 |   |   |   |   |   |   |   |   |   |   |   |   |   |   |   |   |
| 10 | 2 |   | 2 |   | 2 |   | 2 |   | 2 |   | 2 |   | 2 |   | 2 |   |
| 11 |   |   |   |   |   |   |   |   |   |   |   |   |   |   |   |   |
| 12 | 2 | 3 | 2 |   | 2 | 3 | 2 |   | 2 | 3 | 2 |   | 2 | 3 | 2 |   |
| 13 |   |   |   |   |   |   |   |   |   |   |   |   |   |   |   |   |
| 14 | 2 |   | 2 |   | 2 |   | 2 |   | 2 |   | 2 |   | 2 |   | 2 |   |
| 15 |   |   |   |   |   |   |   |   |   |   |   |   |   |   |   |   |

## FIG.8

lignes

| 0 | 2 |   | 2 |   | 2 |   | 2 |   | 2 |   | 2 |   | 2 |   | 2 |   |
|---|---|---|---|---|---|---|---|---|---|---|---|---|---|---|---|---|
| 1 |   | 3 |   |   | 3 |   |   | 3 |   |   |   | 3 |   |   |   |   |
| 2 | 2 |   | 2 |   | 2 |   | 2 |   | 2 |   | 2 |   | 2 |   | 2 |   |
| 3 |   |   | 4 |   |   |   |   |   |   |   | 4 |   |   |   |   |   |
| 4 | 2 |   | 2 |   | 2 |   | 2 |   | 2 |   | 2 |   | 2 |   | 2 |   |
| 5 |   | 3 |   |   | 3 |   |   | 3 |   |   |   | 3 |   |   |   |   |
| 6 | 2 |   | 2 |   | 2 |   | 2 |   | 2 |   | 2 |   | 2 |   | 2 |   |
| 7 |   |   |   |   |   |   |   |   |   |   |   |   |   |   |   |   |
| 8 | 2 |   | 2 |   | 2 |   | 2 |   | 2 |   | 2 |   | 2 |   | 2 |   |
| 9 |   | 3 |   |   | 3 |   |   | 3 |   |   |   | 3 |   |   |   |   |
| 10 | 2 |   | 2 |   | 2 |   | 2 |   | 2 |   | 2 |   | 2 |   | 2 |   |
| 11 |   |   | 4 |   |   |   |   |   |   |   | 4 |   |   |   |   |   |
| 12 | 2 |   | 2 |   | 2 |   | 2 |   | 2 |   | 2 |   | 2 |   | 2 |   |
| 13 |   | 3 |   |   | 3 |   |   | 3 |   |   |   | 3 |   |   |   |   |
| 14 | 2 |   | 2 |   | 2 |   | 2 |   | 2 |   | 2 |   | 2 |   | 2 |   |
| 15 |   |   |   |   |   |   |   |   |   |   |   |   |   |   |   |   |

## FIG.9

FIG.10

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 6587589 B

- WO 02097718 A

**Littérature non-brevet citée dans la description**

- Wavelet Packet Image Décomposition on MIMD Architectures. **FEIL et al.** Real-Time Imaging. Academic Press Ltd, Octobre 2002, vol. 8, 399-412
- **PENG CAO ; CHAOWANG ; JUN YANG ; LONGXING SHI.** Area-efficient line-based twodimensional discrete wavelet transform architecture without data buffer. *ICME 2009, IEEE International Conférence on Multimedia and Expo,* 03 Juillet 2009, (28), 1094-1097

- **H. LIAO ; M.K. MANDAI ; B.F. COCKBURN.** Efficient architectures for 1-d and 2-d lifting-based wavelet transforms. *IEEE Transactions on Signal Processing,* 2004, vol. 52 (5), 1315-1326